# EUROPÄISCHE PATENTSCHRIFT

(11) **EP 1 348 914 B1**
(45) Veröffentlichungstag und Bekanntmachung des Hinweises auf die Patenterteilung: **14.07.2010**
(21) Anmeldenummer: 03075852.8
(22) Anmeldetag: 24.03.2003
(51) Int. Cl.: F24H 1/43, F28F 1/02, F16L 9/19

(54) **Wärmetauscher, Verbrennungsvorrichtung, einen Wärmetauscher umfassend, Absperrelement zur Verwendung in einem solchen Wärmetauscher, und Verfahren zur Herstellung eines Wärmetauschers**
Heat exchanger, combustion apparatus having a heat exchanger, closure member for use in such a heat exchanger, and method for making a heat exchanger
Echangeur de chaleur, installation de combustion avec échangeur de chaleur, élément d'obturation pour utilisation dans un tel échangeur de chaleur et méthode de fabrication d'un échangeur de chaleur

(30) Priorität: 28.03.2002 NL 1020278; 22.07.2002 NL 1021124
(43) Veröffentlichungstag der Anmeldung: 01.10.2003
(73) Patentinhaber: Nefit-Buderus B.V., 7418 BB Deventer (NL)
(72) Erfinder: Jacobs, Gerdewan Gerardus Wilhelmus, 7422 LE Deventer (NL); Feberwee, Gerrit Jan, 7425 HL Deventer (NL); Schoenmaker, Bart Cornelis, 8084 CC 't Harde (NL)
(74) Vertreter: Riemens, Roelof Harm

(56) Entgegenhaltungen:
- EP-A- 0 133 604
- FR-A- 1 183 757
- FR-E- 70 592
- US-A- 4 305 899
- US-A- 6 098 704

## Beschreibung

Die Erfindung betrifft eine Verbrennungsvorrichtung mit einem Brenner und einer Wärmetauscher zur Übertragung von Wärme von dem Brenner zu einem Fluidum, wobei eine Seite des Wärmetauschers zum Brenner gerichtet ist, welcher Wärmetauscher ein Rohr umfasst, wobei das Rohr einen Kanal umfasst, der sich entlang einer Länge des Rohrs zum Durchfließen des Fluidums erstreckt. Weiter betrifft die Erfindung eine Verbrennungsvorrichtung, einen solchen Wärmetauscher umfassend, und ein Absperrelement zur Verwendung in einem solchen Wärmetauscher. Weiter betrifft die Erfindung ein Verfahren zur Herstellung eines solchen Wärmetauschers.

Aus EP 0570201 A1 ist ein Wärmetauscher mit einem Heizrohr bekannt, der schraubenförmig um einen Brenner gewunden ist, wobei sich zwischen dem Brenner und dem Rohr ein vorher festgelegter Abstand befindet. Das Heizrohr umfasst ein Brauchwasserrohr, welches koaxial im Heizrohr zur Erwärmung von sowohl Brauchwasser als auch Heizwasser angeordnet ist. Die Außenseite des Brauchwasserrohrs kann mit spiralförmigen Rillen zur Erreichung einer Turbulenz von Heizwasser versehen sein.

Die Erfindung hat die Aufgabe, den bekannten Wärmetauscher zu verbessern, und eine gleichmäßige Erwärmung des Fluidums, welches durch das Rohr fließt, bereitzustellen.

Zur Lösung dieser Aufgabe ist der erfindungsgemäße Verbrennungsvorrichtunggekennzeichnet durch die Merkmale von Anspruch 1. Dadurch wird erreicht, dass das Fluidum über dessen gesamtes Volumen im Wesentlichen gleichmäßig erwärmt wird, so dass eine Überhitzung, zum Beispiel Kochen, eines Teils des Fluidums, welches sich an einer des Brenners zugewandten Seite befindet und ungenügendes Erwärmen eines anderen Teils des Fluidums, welches sich an einer des Brenners abgewandten Seite befindet, zweckmäßig vermieden werden kann. Im Allgemeinen generiert eine Wärmequelle, wie ein Brenner, Strahlungswärme, Konvektionswärme und Leitungswärme, wobei die Leitungswärme durch entlang dem Rohr oder um das Rohr fließende Gase, wie Rauchgase, auf den Wärmetauscher übertragen werden kann. Mit der Erfindung wird erzielt, dass sich das Fluidum, welches sich im Kanal befindet, über einen Teil der Länge des Rohrs an einer der Wärmequelle zugewandten Seite des Wärmetauschers befindet und vor allem Strahlungswärme und Konvektionswärme empfängt, und sich über einen anderen Teil der Länge des Rohrs an einer von der Wärmequelle abgewandten Seite befindet und vor allem Leitungswärme empfängt, so dass nachteilhafte Auswirkungen von Unterschieden in der Wärmeübertragung zwischen der Wärmequelle zugewandten und von der Wärmequelle abgewandten Teilen des Fluidums vermieden werden. Vor allem im Falle eines Wärmetauschers mit einer hohen Wärmeübertragung pro Längeneinheit des Rohrs, wie heutzutage häufig beabsichtigt wird, und ein damit zusammenhängender großer Durchmesser des Rohrs, sind die Vorteile der Erfindung groß, da große Unterschiede in der Wärmeübertragung zwischen den der Wärmequelle zugewandten und der von der Wärmequelle abgewandten Seite des Rohrs vermieden werden können. Das Rohr kann einen runden, rechteckigen, abgeflachten oder anderen Durchmesser haben.

FR-1.158.943 offenbart einen Wärmetauscher der geformt is aus einem doppelwandigen Rohr bestehend aus einem innenliegenden und einem außenliegenden Rohr. Zwischen einer Außenseite von dem innenliegenden Rohr und einer Innenseite von dem außenliegenden Rohr ist ein Spiralformiges Kanal ausgelegt mittels einer spiralformigen Rippe an der Außenwand von dem innenliegenden Rohr. Ein derartiges. Rohr wird benutzt um Wärme zu übertragen zwischen ein Fluid das durch den spiralformigen Kanal fließt und ein Fluid das in dem innenliegenden Rohr fließt. Die Spiralform wird dabei angewendet um die Länge worüber die beide Fluida, mittels der Wand des innenliegenden Rohres, miteinander verbunden sind, zu vergrößern.

US-6.098.704 offenbart einen Wärmetauscher der geformt ist aus einem doppelwandigen Rohr bestehend aus einem innenliegenden und einem außenliegenden Rohr. Das innenliegende Rohr und das außenliegende Rohr sind integral mit verbindenden Wandteilen geformt. In dem innenliegenden Rohr fließt eine Flüssigkeit die gekühlt werden soll, während in dem Raum zwischen dem innenliegenden Rohr und dem außenliegenden Rohr eine Külhlflüssigkeit fließt.

Vorzugsweise umfasst das Rohr mindestens einen weiter schraubenförmig hinsichtlich dessen Längsachse verlaufenden Kanal, der sich entlang der Länge des Rohrs zum Durchfließen dieses Rohrs von jedenfalls einem Teil des Fluidums erstreckt. Durch die mindestens zwei Kanäle, welche der Kanal und mindestens ein weiterer Kanal sind, kann ein sehr guter Austausch des Fluidums zwischen einer von der Wärmequelle abgewandten und einer der Wärmequelle zugewandten Seite des Rohrs erreicht werden. Die Kanäle können parallel geschaltet sein.

Der Kanal und mindestens ein weiterer Kanal können sich entlang einer Wand des Rohrs zwecks guter Übertragung von Strahlungswärme und Leitungswärme zum Fluidum, welches sich in den Kanälen befindet, erstrecken.

Vorzugsweise umfasst das Rohr weiter mindestens einen Verdrängerkanal, der sich entlang jedenfalls einem Teil der Länge des Rohrs entlang dem schraubenförmig verlaufenden Kanal erstreckt. Durch die Anwesenheit des Verdrängerkanals werden Gewicht und Material eingespart, da sowohl die Menge des sich im Rohr befindlichen Fluidums als auch die Menge des benötigten Materials zur Herstellung des Wärmetauschers reduziert werden.

Vorzugsweise ist mindestens ein Verdrängerkanal an mindestens einem Ende davon durch ein Absperrelement verschlossen. Das Fluidum, welches in den Wärmetauscher hineinfließt bzw. herausfließt, wird somit auf einfache Weise in den Kanal bzw. in die Kanäle geleitet bzw. herausgeleitet, wobei kein Fluidum in den Verdrängerkanal fließt.

Vorzugsweise läuft das Absperrelement zu einer vom Verdrängerkanal abgewandten Seite zum Erreichen einer strömungsgünstigen Gestaltung des Absperrelements im Wesentlichen zapfenförmig zu. Damit ist es möglich Turbulenz des Fluidums, welches in jeden Kanal einfließt bzw. aus jedem Kanal fließt (und daher in unter einander entgegen gesetzten Richtungen das Absperrelement passiert) zu minimalisieren, und einen Strömungswiderstand für das Fluidum zu senken. Darüber hinaus wird eine Erosion am Wärmetauscher bei den Enden des Verdrängerkanals minimalisiert.

Auch ist es möglich den Verdrängerkanal an mindestens einem Ende davon abzusperren, indem eine sich um das Ende des Kanals befindliche Wand des Verdrängerkanals auf geeignete Art und Weise verformt wird. Ein somit verformtes Endgebiet des Verdrängerkanals kann eine konische oder andere zapfenförmig zum Ende zulaufende Form haben, so dass eine strömungsgünstige Gestaltung für das in Betrieb um das Ende des Verdrängerkanals fließende Fluidum erreicht wird.

Das Absperrelement umfasst weiter vorzugsweise für jeden Kanal eine Aussparung, die in der Verlängerung des Kanals zum Einleiten des Fluidums in den Kanal bzw. zum Ausleiten aus dem Kanal angeordnet ist, was eine weitere Senkung des Strömungswiderstands und der Turbulenz ergibt. Ebenfalls wird Erosion am Wärmetauscher an einer Ein- und Ausfließseite eines jeden Kanals reduziert.

Vorzugsweise stehen der Kanal und mindestens ein weiterer Kanal entlang jedenfalls einem Teil der Länge des Rohrs für das Fluidum mit einander in Verbindung. Damit wird eine Vermischung des Fluidums zwischen den Kanälen unter einander und eventuell dadurch auftretender Wärmeaustausch zwischen dem Fluidum, welches sich in jedem der mindestens zwei Kanäle befindet, ermöglicht. Verbindungen zwischen den Kanälen sind dabei so ausgeführt, dass nur ein Teil des Fluidums über die Länge des Rohrs des ersten der mindestens zwei Kanäle zum zweiten der mindestens zwei Kanäle fließt.

Der erfindungsgemäße Wärmetauscher umfasst vorzugsweise ein Extrusionsprofil. Indem der Wärmetauscher, oder mindestens eine Wand des Kanals, durch den das Fluidum fließt, aus einem Extrusionsprofil hergestellt ist, wird eine gute Leitung von Wärme rundum den Kanal, durch den das Fluidum fließt, erreicht. Dadurch wird eine relativ homogene Temperatur der Wand erreicht, so dass ein guter Austausch von Wärme zwischen der Wand des Kanals und dem Fluidum auftritt. Durch die gute Wärmeleitung des Tauschers, oder mindestens der Wand des Kanals, wird erreicht, dass, trotzdem nur eine Seite des Wärmetauschers der Wärmequelle zugewandt ist, die Wand des Kanals eine möglichst homogene Temperatur hat, was einen positiven Einfluss auf den Austausch von Wärme mit dem im Kanal fließenden Fluidum hat. Der Wärmetauscher ist vorzugsweise aus einem Metall wie Aluminium, welches eine hohe thermische Leitung und ein niedriges Gewicht hat, hergestellt.

Das Verfahren zur Herstellung des erfindungsgemäßen Wärmetauschers ist gekennzeichnet durch die Schritte der Herstellung eines Rohrprofils durch Extrusion, in dem sich die Kanäle in gestrecktem Zustand befinden, dem Verdrillen des Rohrprofils, und dem Formen des somit verdrillten Rohrprofils zu einem Wärmetauscher. Auf diese Art und Weise ist es möglich das Rohr mit schraubenförmigen Kanälen auf einfache und schnelle Art und Weise herzustellen, da an und für sich bekannte und erprobte Herstellungsverfahren verwendet werden.

Vorzugsweise umfasst das erfindungsgemäße Verfahren den weiteren Schritt des Walzens von Verformungen, insbesondere Rippen auf einer Außenseite des Rohrprofils. Durch Walzen können die Rippen oder andere Verformungen auf eine einfache und kostenwirksame Weise angebracht werden. Alternativ ist es möglich ein separates mit Verformungen, insbesondere Rippen, versehenes Element um das Rohrprofil anzubringen. Selbstverständlich ist es auch möglich, dass die Rippen oder andere Verformungen auf eine andere Art und Weise auf oder um das Rohr angebracht werden.

In einer bevorzugten Ausführungsform umfasst das Verfahren weiter die weiteren Schritte der Bereitstellung eines Verdrängerkanals im Rohrprofil, und das Absperren des Endes des Verdrängerkanals, indem eine Wand des Verdrängerkanals an dessen Ende im Wesentlichen konisch verformt wird. Somit kann durch eine zum Ende hin im Wesentlichen konisch verformte, und somit in einem Endgebiet im Wesentlichen zapfenförmig zum Ende zulaufende Wand des Verdrängerkanals eine einfache und zuverlässige Absperrung des Verdrängerkanals und eine strömungsgünstige Gestaltung der Absperrung erreicht werden. Ebenfalls muss damit kein zusätzlicher Teil wie ein Absperrelement zum Absperren des Endes des Verdrängerkanals angeordnet werden.

Weitere Merkmale und Vorteile der Erfindung werden anhand der beigefügten Zeichnung, in der nichteinschränkende Ausführungsbeispiele gezeigt sind, erläutert, worin:
- Fig. 1: eine Seitenansicht im Querschnitt eines Teils eines Rohrs aus einem erfindungsgemäßen Wärmetauscher zeigt;
- Fig. 2: einen Querschnitt eines Teils des Rohrs gemäß Fig. 1 zeigt;
- Fig. 3: eine schematische, perspektivische Seitenansicht eines erfindungsgemäßen Wärmetauschers zeigt;
- Fig. 4: eine schematische, perspektivische Seitenansicht eines anderen erfindungsgemäßen Wärmetauschers zeigt;
- Fig. 5a und 5b: eine Vorderansicht beziehungsweise eine Seitenansicht eines erfindungsgemäßen Absperrelements zeigen.

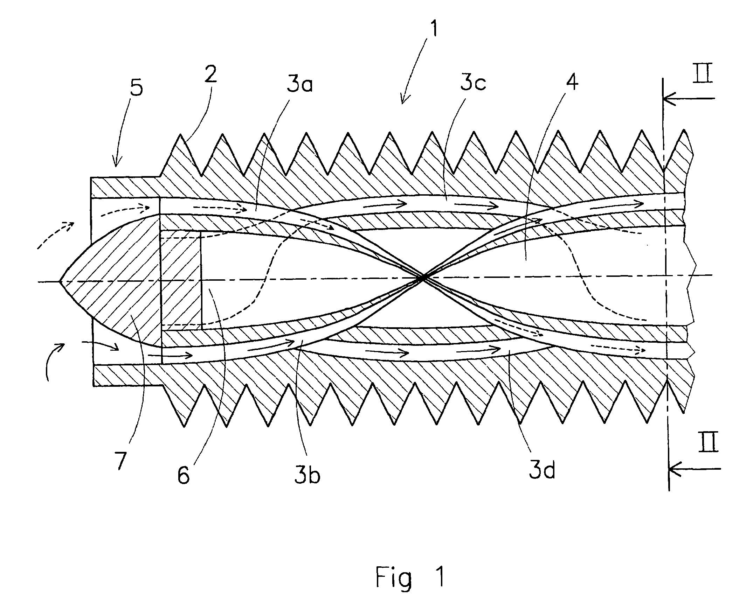

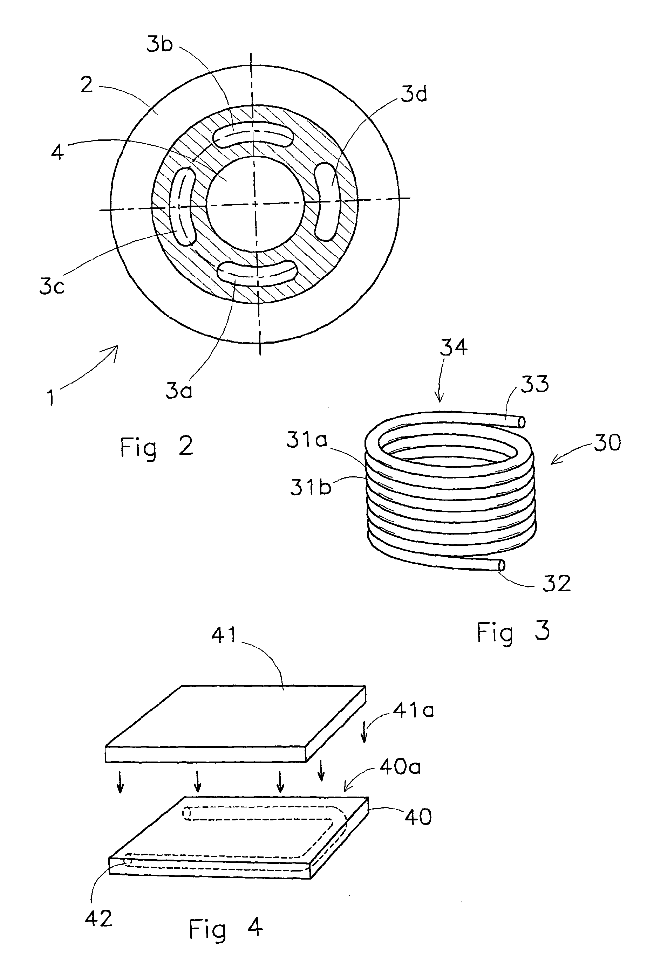

Fig. 1 zeigt einen Teil eines Rohrs 1 eines Wärmetauschers. Das Rohr 1 umfasst eine große Anzahl Rippen 2 entlang dessen Außenseite zum Vergrößern einer Fläche des Rohrs und zum Vergrößern einer Wärmeübertragung. Das Rohr ist mit vier Kanälen 3a, 3b, 3c, 3d versehen, die sich entlang einer Länge des Rohrs 1 erstrecken und die entlang der Länge des Rohrs schraubenförmig um einander gewickelt sind. Die Kanäle 3a, 3b, 3c, 3d dienen zum Durchfließen eines Fluidums, wie Wasser oder Gas, das im Wärmetauscher erwärmt wird. Wie in Fig. 2 gezeigt, erstrecken sich die Kanäle 3a, 3b, 3c, 3d entlang einer Wand des Rohrs 1. Weiter umfasst das Rohr einen Verdrängerkanal 4, der sich entlang der Länge des Rohrs 1 durch eine Mitte davon erstreckt. Der Verdrängerkanal 4 befindet sich in einem von den Kanälen 3a, 3b, 3c, 3d begrenzten Raum, wie ebenfalls in Fig. 2 gezeigt. Fig. 1 zeigt weiter ein Ende 5 des Rohrs 1, das zum Beispiel auf einer Leitung zum Zuführen von Fluidum anschließbar ist. Zur Vermeidung, dass das Fluidum in den Verdrängerkanal 4 drängt, ist ein Ende 6 des Verdrängerkanals 4 mit einem Absperrelement, wie in diesem Fall der Pfropfen 7 verschlossen. Der Pfropfen 7 hat an einer vom Verdrängerkanal 4 abgewandten Seite eine strömungsgünstige Gestaltung, zum Beispiel eine im Wesentlichen zapfenförmig zulaufende Gestaltung, so dass das aus der Leitung in die Kanäle 3a, 3b, 3c, 3d fließende Fluidum beim Fließen aus der Leitung in die Kanäle 3a, 3b, 3c, 3d möglichst wenig Widerstand und Turbulenz empfindet. Da die Kanäle 3a, 3b, 3c, 3d schraubenförmig sind, wird das durch sie fließende Fluidum abwechselnd entlang verschiedener Seiten einer Wand des Rohrs 1 fließen.

Wenn eine Wärmequelle sich an einer Seite des Rohrs 1 befindet, wird sich das durch die Kanäle 3a, 3b, 3c, 3d fließende Fluidum abwechselnd an einer der Wärmequelle zugewandten und einer von der Wärmequelle abgewandten Seite befinden. Dadurch wird erzielt, dass das Fluidum gleichmäßig erwärmt wird. Durch den Verdrängerkanal 4 wird Material, wie Aluminium, zum Herstellen des Rohrs 1 eingespart, und es wird durch die Anwesenheit von weniger Material eine thermische Responszeit des Rohrs 1 abnehmen, so dass zum Beispiel beim Einschalten der Wärmequelle schneller eine Erwärmung des Fluidums stattfindet.

Weiter ist es möglich, dass die Kanäle 3a, 3b, 3c, 3d lokal, oder entlang einer Länge des Rohrs unter einander hydraulisch mit einander verbunden sind, so dass ein Teil des Fluidums, das sich in den Kanälen befindet, von einem der Kanäle zu einem anderen der Kanäle fließen kann.

Das Rohr 1 des Wärmetauschers ist vorzugsweise aus einem Rohrprofil, welches durch Extrusion hergestellt ist, und in dem sich die Kanäle in gestrecktem Zustand befinden, wobei das Rohrprofil anschließend verdrillt wird und zu einem Wärmetauscher geformt wird, hergestellt. Durch Herstellung des Wärmetauschers durch Extrusion tritt eine gute thermische Leitfähigkeit der Wand rundum den Kanal oder den Kanälen, durch die das Fluidum fließt, auf. Durch die relativ dicke Wand, die beim Extrudieren gebildet wird, ist ja dessen thermische Leitfähigkeit hoch. Die dadurch auftretende relativ homogene Temperatur der Wand rund um den Kanal fördert einen guten Wärmeaustausch zwischen dem Fluidum und der Wand des Kanals. Verformungen, wie Rippen, können auf einer Außenseite des Profils gewalzt werden. Somit kann der Tauscher mit bekannten und erprobten Herstellungsverfahren hergestellt werden.

Fig. 3 zeigt einen Wärmetauscher 30, der aus einem Rohr, von dem ein Teil in Fig. 1 gezeigt ist, aufgebaut ist. Das Rohr ist im Wesentlichen schraubenförmig und Windungen 31a, 31b des Rohrs können an einander anliegen bzw. es ist möglich, dass sich zwischen den Windungen 31a, 31b ein Zwischenraum befindet. Durch den Zwischenraum zwischen den Windungen 31a, 31b bzw. durch den Raum zwischen den Rippen 2 des Rohrs, können heiße Gase, wie Rauchgase, um das Rohr fließen. Fluidum wie Wasser, kann von einem ersten Ende 32 zu einem zweiten Ende 33 des Rohrs durch das Rohr fließen. Eine Wärmequelle, wie ein Brenner, kann sich in einem vom Wärmetauscher 30 umschlossenen Raum 34 befinden.

Selbstverständlich ist die Erfindung auch auf Wärmetauscher anwendbar, die auf allerlei andere Art und Weise gebildet sind, wie zum Beispiel ein in Fig. 4 gezeigter Wärmetauscher 40, der mit einer ersten Seite 40a einer Wärmequelle wie einem Brenner 41 mit Flammen, die in eine Richtung der Pfeile 41a austreten, zugewandt ist. Das Rohr 42 kann sich meanderförmig oder auf jede andere geeignete Weise durch den Tauscher erstrecken.

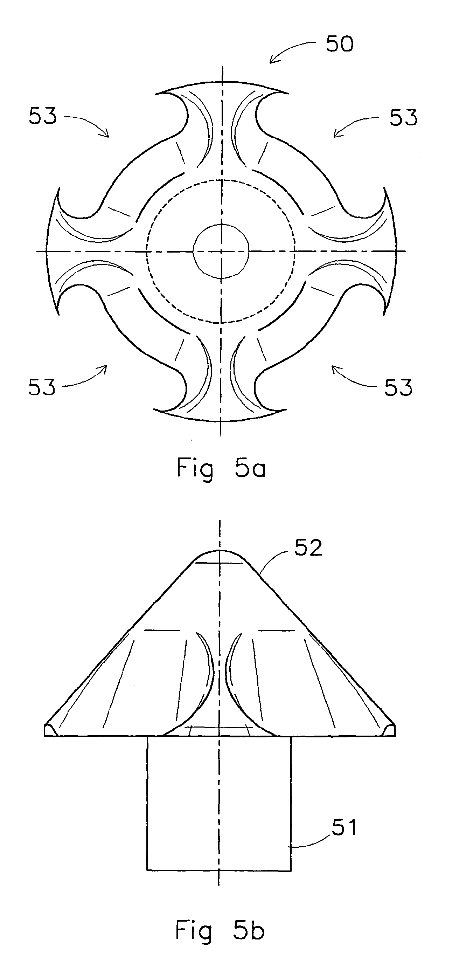

Fig. 5a und 5b zeigen ein Absperrelement 50, mit einem in Fig. 5b gezeigten Einsteckteil 51, das in ein Ende des Verdrängerkanals steckbar ist und zum Beispiel eine solche Gestaltung hat, dass dieser Einsteckteil eng auf eine Wand des Verdrängerkanals anschließt und zum Abdichten des Verdrängerkanals in den Verdrängerkanal klemmbar ist, um somit zu verhindern, dass Fluidum in den Verdrängerkanal eindringt. Das Absperrelement 50 umfasst weiter einen im Wesentlichen zapfenförmig zulaufenden Teil 52, welcher wie in Fig. 5b gezeigt, zu einer vom Verdrängerkanal abzuwendenden Seite im Wesentlichen zapfenförmig zuläuft. Der zapfenförmig zulaufende Teil 52 umfasst weiter in diesem Beispiel vier Aussparungen 53. Die Aussparungen 53 haben eine Gestaltung, die, wenn das Absperrelement an einem Ende des Verdrängerkanals angebracht ist, auf jedenfalls einen Teil des Endes der Kanäle anschließt. Die als Beispiel gezeigte Gestaltung der vier Aussparungen 53 schließt, bei einer geeigneten Dimensionierung und Anordnung, auf die vier Kanäle 3a, 3b, 3c und 3d (welche der Kanal und drei weitere Kanäle sind) wie gezeigt in Fig. 2, an, so dass das Fluidum an den Aussparungen 53 entlang in die Kanäle eingeleitet bzw. ausgeleitet wird. Durch die im Wesentlichen zapfenförmig zulaufende Form von jedenfalls einem Teil des Absperrelements 50 und durch die Aussparungen 53 ist es möglich, einen Strömungswiderstand und Turbulenz des entlang dem Absperrelement fließenden Fluidums zu reduzieren. Ebenfalls wird Materialerosion am Wärmetauscher bei den Enden des Verdrängerkanals und an den Enden der Kanäle reduziert.
Auch ist es möglich, ein Ende des Verdrängerkanals abzusperren, indem die Wand des Verdrängerkanals an dessen Ende konisch verformt wird, so dass damit die Wand des Verdrängerkanals im Wesentlichen zapfenförmig zum Ende des Verdrängerkanals hin zuläuft.

Es wird deutlich sein, dass der erfindungsgemäße Wärmetauscher ebenfalls zum Kühlen des Fluidums anwendbar ist. Im Rahmen der Erfindung sollte unter einer Wärmequelle dann auch neben einer wärmegenerierenden Quelle auch eine wärmeableitende Quelle verstanden werden und es sollte unter "dem Übertragen von Wärme zu" ebenfalls "das Abführen von Wärme von" verstanden werden.

## Patentansprüche

1. Verbrennungsvorrichtung umfassend einen Brenner und einen Wärmetauscher (40) zum Übertragen von Wärme von dem Brenner (41) hin zu einem Fluidum, wobei eine Seite des Wärmetauschers zum Brenner gewandt ist, welcher Wärmetauscher ein Rohr (41; 1) umfasst, wobei das Rohr (1) einen Kanal (3a) umfasst, der sich entlang einer Länge des Rohrs (1) erstreckt zum Fließen des Fluidums durch den Kanal (1), **dadurch gekennzeichnet, dass** der Kanal (3a) schraubenförmig hinsichtlich einer Längsachse des Rohrs (1) angeordnet ist, um das Fluidum, welches in den Kanal (3a) fließt, immer abwechselnd an der dem Brenner (41) zugewandten Seite des Wärmetauschers (40) und an einer von dem Brenner (41) abgewandten Seite des Wärmetauschers (40) fließen zu lassen.

2. Verbrennungsvorrichtung nach Anspruch 1, **dadurch gekennzeichnet, dass** das Rohr (1) mindestens einen weiteren schraubenförmig hinsichtlich der Längsachse verlaufenden Kanal (3b) umfasst, der sich entlang der Länge des Rohrs zum Durchfließen von jedenfalls einem Teil des Fluidums, erstreckt.

3. Verbrennungsvorrichtung nach Anspruch 1 oder 2, **dadurch gekennzeichnet, dass** der Kanal (3a) und der mindestens eine weitere Kanal (3b) sich entlang einer Wand des Rohrs erstrecken.

4. Verbrennungsvorrichtung nach einem der Ansprüche 1 bis 3, **dadurch gekennzeichnet, dass** das Rohr weiter mindestens einen Verdrängerkanal (4) umfasst, der sich entlang jedenfalls einem Teil der Länge des Rohrs entlang dem schraubenförmig verlaufenden Kanal erstreckt.

5. Verbrennungsvorrichtung nach Anspruch 4, **dadurch gekennzeichnet, dass** der mindestens eine Verdrängerkanal (4) an mindestens einem Ende davon durch ein Absperrelement (7) verschlossen ist.

6. Verbrennungsvorrichtung nach Anspruch 5, **dadurch gekennzeichnet, dass** das Absperrelement (7) nach einer vom Verdrängerkanal abzuwendenden Seite hin zum Erreichen einer strömungsgünstigen Gestaltung des Absperrelements im Wesentlichen zapfenförmig (52) zuläuft.

7. Verbrennungsvorrichtung nach Anspruch 6, **dadurch gekennzeichnet, dass** das Absperrelement für jeden Kanal eine Aussparung (53) umfasst, die zum Einleiten in den Kanal bzw. zum Ausleiten des Fluidums aus dem Kanal in die Verlängerung des Kanals angeordnet werden soll.

8. Verbrennungsvorrichtung nach einem der Ansprüche 2 bis 7, **dadurch gekennzeichnet, dass** der Kanal und mindestens ein weiterer Kanal entlang mindestens einem Teil der Länge des Rohrs für das Fluidum mit einander in Verbindung stehen.

9. Absperrelement (50) zur Verwendung in einem Wärmetauscher nach einem der Ansprüche 5 bis 8.

10. Verfahren zur Herstellung eines Wärmetauschers nach einem der Ansprüche 1 bis 8, **dadurch gekennzeichnet, dass** die Schritte folgende sind:
- das Herstellen eines Rohrprofils durch Extrusion, in dem sich die Kanäle in gestrecktem Zustand befinden;
- das Verdrillen des Rohrprofils; und
- das Formen des somit verdrillten Rohrprofils zu einem Wärmetauscher.

11. Verfahren nach Anspruch 10, **gekennzeichnet durch** den weiteren Schritt des Walzens von Verformungen, insbesondere Rippen auf einer Außenseite des Rohrprofils.

12. Verfahren nach Anspruch 10, **gekennzeichnet durch** den weiteren Schritt des Anbringens eines separaten mit Verformungen, insbesondere Rippen, versehenen Elements, um das Rohrprofil.

13. Verfahren nach einem der Ansprüche 10 bis 12, **dadurch gekennzeichnet, dass** die weiteren Schritte das Bereitstellen eines Verdrängerkanals im Rohrprofil, und das Absperren des Endes des Verdrängerkanals, indem eine Wand des Verdrängerkanals an einem Ende davon hauptsächlich konisch verformt wird, sind.

## Claims

1. Combustion apparatus, comprising a burner and a heat exchanger (40) for the transfer of heat from the burner (41) to a fluid, one side of the heat exchanger facing the burner, which heat exchanger comprises a tube (41; 1), the tube (1) comprising a duct (3a) which extends along a length of the tube (1) for the flow of the fluid through the duct (1), **characterized in that** the duct (3a) is arranged helically with respect to a longitudinal axis of the tube (1), in order to cause the fluid, which flows into the duct (3a), always to flow alternately on that side of the heat exchanger (40) which faces the burner (41) and on a side of the heat exchanger (40) which faces away from the burner (41).

2. Combustion apparatus according to claim 1, **characterized in that** the tube (1) comprises at least one further duct (3b) which runs helically with respect to the longitudinal axis and which extends along the length of the tube for the throughflow of in any event part of the fluid.

3. Combustion apparatus according to claim 1 or 2, **characterized in that** the duct (3a) and the at least one further duct (3b) extend along a wall of the tube.

4. Combustion apparatus according to one of claims 1 to 3, **characterized in that** the tube comprises, further, at least one displacer duct (4) which extends along the helically running duct over in any event part of the length of the tube.

5. Combustion apparatus according to claim 4, **characterized in that** the at least one displacer duct (4) is closed at at least one end thereof by means of a shut-off element (7).

6. Combustion apparatus according to claim 5, **characterized in that** the shut-off element (7) tapers in an essentially cone-shaped manner (52) towards a side which is to face away from the displacer duct, in order to achieve a streamlined configuration of the shut-off element.

7. Combustion apparatus according to claim 6, **characterized in that** the shut-off element comprises for each duct a clearance (53) which is to be arranged in the prolongation of the duct in order to conduct the fluid into the duct or to conduct it out of the duct.

8. Combustion apparatus according to one of claims 2 to 7, **characterized in that** the duct and at least one further duct are connected to one another along at least part of the length of the tube for the fluid.

9. Shut-off element (50) for use in a heat exchanger according to one of claims 5 to 8.

10. Method for producing a heat exchanger according to one of claims 1 to 8, **characterized in that** the steps are as follows:
- the production by extrusion of a tube profile in which the ducts are in the stretched-out state;
- the twisting of the tube profile; and
- the shaping of the thus twisted tube profile into a heat exchanger.

11. Method according to claim 10, **characterized by** the further step of the rolling of deformations, in particular ribs on an outside of the tube profile.

12. Method according to claim 10, **characterized by** the further step of affixing a separate element provided with deformations, in particular ribs, around the tube profile.

13. Method according to one of claims 10 to 12, **characterized in that** the further steps are the provision of a displacer duct in the tube profile, and the shut-off of the end of the displacer duct, **in that** a wall of the displacer duct is deformed mainly conically at one end thereof.

## Revendications

1. Dispositif de combustion comprenant un brûleur et un échangeur de chaleur (40) pour transférer de la chaleur du brûleur (41) à un fluide, dans lequel un côté de l'échangeur de chaleur est orienté vers le brûleur, l'échangeur de chaleur comprenant un tube (41 ; 1), dans lequel le tube (1) comprend un canal (3a), qui s'étend sur une longueur du tube (1) pour l'écoulement du fluide à travers le canal (1), **caractérisé en ce que** le canal (3a) est aménagé en hélice autour d'un axe longitudinal du tube (1) afin que le fluide, qui s'écoule dans le canal (3a), puisse toujours s'écouler en alternance sur le côté de l'échangeur de chaleur (40) orienté vers le brûleur (41) et sur un côté de l'échangeur de chaleur (40) opposé au brûleur (41).

2. Dispositif de combustion selon la revendication 1, **caractérisé en ce que** le tube (1) comprend au moins un autre canal (3b) s'étendant en hélice autour de l'axe longitudinal sur la longueur du tube pour permettre la traversée en tout cas d'au moins une partie du fluide.

3. Dispositif de combustion selon la revendication 1 ou 2, **caractérisé en ce que** le canal (3a) et le au moins un autre canal (3b) s'étendent le long d'une paroi du tube.

4. Dispositif de combustion selon l'une quelconque des revendications 1 à 3, **caractérisé en ce que** le tube comprend encore au moins un canal de refoulement (4), qui s'étend en tout cas le long d'une partie de la longueur du tube, le long du canal s'étendant en hélice.

5. Dispositif de combustion selon la revendication 4, **caractérisé en ce que** le au moins un canal de refoulement (4) est fermé à au moins l'une de ses extrémités par un élément d'obstruction (7).

6. Dispositif de combustion selon la revendication 5, **caractérisé en ce que** l'élément d'obstruction (7) se termine sensiblement sous forme conique (52) du côté opposé au canal de refoulement pour présenter une conformation de l'élément d'obstruction favorable à l'écoulement.

7. Dispositif de combustion selon la revendication 6, **caractérisé en ce que** l'élément d'obstruction comprend, pour chaque canal, un évidement (53), qui sera ménagé dans le prolongement du canal pour l'entrée du fluide dans le canal ou pour la sortie du fluide du canal .

8. Dispositif de combustion selon l'une quelconque des revendications 2 à 7, **caractérisé en ce que** le canal et au moins un autre canal le long d'au moins une partie du tube sont en communication l'un avec l'autre pour le fluide.

9. Elément d'obstruction (50) pour utilisation dans un échangeur de chaleur selon l'une quelconque des revendications 5 à 8.

10. Procédé de fabrication d'un échangeur de chaleur selon l'une quelconque des revendications 1 à 8, **caractérisé en ce qu'**il présente les étapes suivantes :
- la fabrication par extrusion d'un profil de tube, dans lequel les canaux se trouvent à l'état allongé ;
- la torsion du profil de tube ; et
- le façonnage du profil de tube ainsi tordu sous la forme d'un échangeur de chaleur.

11. Procédé selon la revendication 10, **caractérisé par** l'étape supplémentaire de laminage de déformations, en particulier de nervures, sur une face extérieure du profil de tube.

12. Procédé selon la revendication 10, **caractérisé par** l'étape supplémentaire d'application d'un élément séparé pourvu de déformations, en particulier de nervures, autour du profil de tube.

13. Procédé selon l'une quelconque des revendications 10 à 12, **caractérisé en ce que** les étapes supplémentaires sont la préparation d'un canal de refoulement dans le profil de tube et l'obstruction de l'extrémité du canal de refoulement, dans lequel une paroi du canal de refoulement est façonnée essentiellement sous forme conique à l'une de ses extrémités.
